# NEUE EUROPÄISCHE PATENTSCHRIFT

(11) **EP 0 266 515 B2**
(45) Veröffentlichungstag und Bekanntmachung des Hinweises auf die Entscheidung über den Einspruch: **10.04.1996**
(45) Hinweis auf die Patenterteilung: 08.07.1992
(21) Anmeldenummer: 87113079.5
(22) Anmeldetag: 08.09.1987
(51) Int. Cl.: B41F 13/16, B41F 27/00

(54) **Verfahren und Vorrichtung zur Passerkorrektur**
Method and apparatus for register correction
Méthode et appareil pour la correction du registre

(30) Priorität: 04.10.1986 DE 3633855
(43) Veröffentlichungstag der Anmeldung: 11.05.1988
(73) Patentinhaber: Heidelberger Druckmaschinen Aktiengesellschaft, D-69019 Heidelberg (DE)
(72) Erfinder: Jeschke, Willi, D-6900 Heidelberg (DE); Rodi, Anton Dipl.-Ing., D-6906 Leimen 3 (DE)
(74) Vertreter: Stoltenberg, Baldo Heinz-Herbert

(56) Entgegenhaltungen:
- DE-A- 3 541 222
- DE-C- 3 136 703
- DE-C- 3 222 022
- PATENT ABSTRACTS OF JAPAN, Band 7, Nr. 85 (M-206)[1230], 9. April 1983; JP-A-58 11 156 (KOMORI INSATSU KIKAI K.K.) 21.01.1983

## Beschreibung

Die Erfindung betrifft ein Verfahren zur Passerkorrektur durch Verschwenken einer biegsamen Druckplatte auf dem Plattenzylinder einer Druckmaschine, gemäß den Merkmalen des Oberbegriffs von Anspruch 1. Weiterhin betrifft die Erfindung eine Vorrichtung mit einer um einen Plattenpunkt schwenkbar auf einem Plattenzylinder angeordneten Druckplatte zur Durchführung des Verfahrens nach Anspruch 1.

Eine bekannte Ausführung dieser Art zeigt die DE 32 22 022 C, bei der die erforderliche Korrektur der Diagonalverstellung mit Hilfe von Probedrucken ermittelt wird. Das Verschwenken der Druckplatte auf dem Plattenzylinder wird sodann von Hand über Stellschrauben an den Spannschienen der Druckplatte vorgenommen. Der jeweilige Verstellweg wird an den Seitenkanten des Druckbildes ausgemessen. Bei einer Diagonalverstellung wird die Druckplatte sodann um einen bestimmten Punkt verschwenk.

Aus der DE-C 31 36 703 ist es bekannt, Paßmarken auf den Druckplatten abzutasten, die Werte einem Rechner zuzuführen und an eine Registersteuerung weiterzugeben. Die Registersteuerung bewirkt nur die Verstellung der Plattenzylinder, jedoch kein Schwenken der Druckplatten. Hier ist es nur möglich, die Schräglage einer Druckplatte durch Schrägstellung des Plattenzylinders zu korrigieren.

Durch die Korrektur der Schräg tage einer Druckplatte mittels Schrägstellung des Druckplattenzylinders über seine Lagerung kann zwar der Schrägstellung des Druckbildes entgegengewirkt werden, die Verstellung des Zylinders bewirkt jedoch eine Verzerrung des Druckbildes dahingehend, daß ein rechteckförmiges Bild parallelogrammförmig verschoben gedruckt wird.

Aus der DE-OS 35 41 222 ist auch eine Vorrichtung zum Korrigieren der Verkantung von Druckplatten bei einer Druckmaschine bekannt, die eine mechanische Konstruktion vorsieht, welche eine Drehung der Platte ermöglicht. Es handelt sich jedoch um eine Vorrichtung, bei der der Drucker die Seiten-, Umfangs- und Diagonalregisterverstellungen mehrmals nacheinander vornehmen muß, wobei immer wieder Probedrucke notwendig sind und erst durch dieses mehrmalige Nachstellen der drei Registereinstellungen eine Annäherung an die optimale Einstellung stattfindet.

Die Aufgabe der Erfindung besteht darin, eine Vereinfachung und Zeiteinsparung beim Einrichtvorgang als auch eine Verringerung des Makulaturanfalls zu erzielen.

Die Aufgabe wird erfindungsgemäß dadurch gelöst, daß Stellbefehle aus den vorher ermittelten Daten auch die Lage eines Plattendrehpunktes der zugehörigen Vorrichtung berücksichtigen.

Die erfindungsgemäße Vorrichtung zur Durchführung des Verfahrens nach Anspruch 1 ist dadurch gekennzeichnet, daß ein Rechner zur Verknüpfung dieser Daten mit den Bedingungen eines fixen Plattendrehpunktes und zur Ermittlung der Stellbefehle für entsprechende Stelleinrichtungen vorgesehen ist.

Die Erfindung vereinfacht wesentlich die Einstellarbeiten zur Erzielung einer guten Passerhaltigkeit. Bisher war es erforderlich, anhand eines ersten Probedruckes die Schräglage der Druckplatte zu ermitteln und diese geradezustellen und anschließend nach einem weiteren Probedruck die Seiten- und Umfangsregisterverschiebung zu ermitteln und zu korrigieren.

Nunmehr werden nach einem einzigen Probedruck die Daten für Umfangs-, Seitenregister und der Winkellage ermittelt und die Korrektur durchgeführt. Der anschließende Probedruck zeigt dann ein korrektes Druckbild.

Gegeneinander verdrehte Druckbilder in den einzelnen Druckfarben können verschiedene Ursachen haben. Bei der Herstellung einer Druckplatte kann es beispielsweise vorkommen, daß ein auf die Druckplatte zu übertragendes Bild gegenüber der Ausrichtung der Druckplatte verdreht bzw. verkantet auf die Druckplatte projiziert wird. Außerdem kann unter Umständen bei nicht ordnungsgemäßem Einspannen der Druckplatte in die Aufnahmevorrichtung des Druckplattenzylinders die Druckplatte verdreht eingespannt werden. Eine solche Verdrehung gegenüber der Druckplatte eines weiteren Druckwerks bei einer Mehrfarbendruckmaschine kann durch Seiten- und Umfangsregisterverstellung nicht ausgeglichen, sondern bestenfalls auf einen geringeren Fehler reduziert werden.

Eine Bedienperson wird einen solchen Fehler beispielsweise dadurch feststellen, daß sie in einem Bereich eines Druckbildes Passerhaltigkeit und in einem weiteren eine Passerabweichung feststellt. Um einen Punkt im Bereich der Passerhaltigkelt muß werden. Aus dem Bereich der Passerabweichung kann, bezogen auf den Passerdrehpunkt, ein Schwenk- oder Verdrehwinkel der Platte nach Größe und Richtung bestimmt werden. Da die Druckplatte nur um einen konstruktiv bedingt genau definierten Drehpunkt auf dem Druckplattenzylinder gedreht werden kann, ist nach einer erfolgten Drehung der Druckplatte um diesen Punkt eine Kompensation der Seiten- und Umfangsregisterverschiebung erforderlich

Liegt sowohl eine Seiten- und Umfangsregisterverschiebung als auch eine Verdrehung einer Druckplatte vor, dann kann ein Bereich einer Passerhaltigkeit auf dem Druckbild nicht festgestellt werden. In diesem Fall ist eine Abweichung aller drei zu korrigierenden Werte entweder an Paßmarken oder direkt aus dem Paßfehler im Bild zu bestimmen.

Ein weiterer Vorteil der Erfindung ist darin zu sehen, daß bestimmte Bereiche eines Bildes zu bildwichtigen Teilen erklärt werden können und insbesondere nach diesen die Ausrichtung der Platte vorgenommen wird.

Gemäß einer Weiterbildung der Erfindung wird vorgeschlagen, eine Eingabeeinrichtung zur Eingabe der Daten vorzusehen, wobei diese Eingabeeinrichtung ein Eingabefeld aufweist. Das Eingabefeld entspricht dabei dem Druckbild mit gleichem oder unterschiedlichem Maßstabsverhältnis. Durch ein solches Eingabefeld wird eine besonders einfache Eingabe der Daten dadurch möglich, daß die Position des Paßpunktes auf dem Druckprodukt positionsgleich in das Eingabefeld eingegeben werden kann. Ebenso kann die Größe und Richtung des Verdrehwinkels nach Art einer graphischen Eingabe in das Eingabefeld eingegeben werden. Selbstverständlich ist auch eine numerische Eingabe einer oder mehrerer Daten über das Eingabefeld möglich.

Eine weitere vorteilhafte Ausgestaltung der Erfindung ist darin zu sehen, daß das Eingabefeld bezuglich der x- und y-Richtungen unterschiedliche Maßstabsfaktoren bezogen auf das Druckprodukt aufweist. Diese ist besonders dann zweckmäßig, wenn beispielsweise nur ein geringer und beschränkter Platz auf einem Bedienpult einer Druckmaschine zur Verfügung steht oder ein vorhandenes Eingabefeld mit bestimmten Abmessungen zur Eingabe der Daten herangezogen werden soll.

Weiterbildungsgemäß wird vorgeschlagen, das Eingabefeld als ein Sensorfeld auszubilden, wobei dann die Eingabe der Daten mit entsprechenden Sensoren, beispielsweise über das Drücken bzw. Berühren von Sensortasten oder über kontaktlose induktive Übertragung erfolgen kann.

Zur Darstellung der eingegebenen Positionen oder Daten ist gemäß einer vorteilhatten Weiterbildung dem Sensorfeld ein Anzeigefeld unterlagert, so daß beim Eingeben der Daten diese gleichzeitig angezeigt werden und eine Korrektur evtl. falsch eingegebener Daten unmittelbar vorgenommen werden kann. Diese Anzeige ist besonders dann nützlich, wenn beispielsweise die Größe des Verdrehwinkels graphisch eingegeben wird, z.B. als Sehne zwischen den beiden Schenkeln des Winkels.

Eine weitere Ausgestaltung der Erfindung sieht vor, ein Farbzonen-Anzeige- und -Eingabesystem, wie es bei der Mehrzahl von Fernsteuerpulten zur Steuerung einer Druckmaschine angewendet wird, als Steuerpult für das Verfahren zu benutzen. Ein solches sogenanntes Farbzonendisplay zeigt das Farbschichtprofil über die gesamte Druckbreite an und besteht beispielsweise aus einer Vielzahl von Leuchtdiodenreihen, wobei jede Reihe einem Farbdosierelement zugeordnet ist und die Länge jeder Reihe die Größe des Farbspaltes darstellt. Der augenblicklich eingestellte Farbspalt eines einzelnen Farbdosierelementes wird durch das Aufleuchten einer oder mehrerer Leuchtdioden in der Reihe angezeigt. Mittels Tasten oder anderer Bedienelemente kann der jeweilige Farbspalt und die entsprechende Anzeige verändert werden. Ein solches Farbzonendisplay kann in vorteilhafter Weise dazu benutzt werden, die Daten zur Plattendrehung einzugeben. Für diesen Fall stellt die Breite des Farbzonendisplays die Breite der Druckplatte dar, während die Länge der Druckplatte durch die Länge der Diodenreihen dargestellt wird. Somit besteht die Möglichkeit, ein der Lage des Paßpunktes entsprechendes Sensorelement und dessen zugeordnete Leuchtdiode zu aktivieren und die Richtung und Größe des Verdrehwinkels, beispielsweise durch Ansteuern mehrerer Sensorelemente, mit deren Leuchtdioden in einer Reihe einzugeben bzw. anzuzeigen. Selbstverständlich ist es erforderlich, vor einer solchen Eingabe der Daten den Eingabemodus zu ändern und das Druckwerk, in welchem die Plattendrehung erfolgen soll, anzuwählen.

Es besteht weiterhin die Möglichkeit, an einem Steuerpult einer Druckmaschine zusätzlich vorhandene Anzeige- bzw. Eingabefelder, beispielsweise zur Registerverstellung der Register in den einzelnen Druckwerken, zur graphischen Eingabe der Daten zu benutzen.

Weiterbildungsgemäß wird vorgeschlagen, zur Eingabe der Daten einen Lichtgriffel zu benutzen. Mit diesem Lichtgriffel kann auf einem Sensorfeld die Position des Paßpunktes und der Verdrehwinkel über entsprechende lichtempfindliche Sensoren eingegeben werden. Selbstverständlich besteht auch die Möglichkeit, anstelle eines Lichtgriffels einen Eingabegriffel zu verwenden, der beispielsweise über eine induktive Kopplung mit dem Eingabefeld zusammenarbeitet, ebenso wie die Verwendung eines Lichtschrankengitters anstelle eines Eingabefeldes, welches den Vorteil hat, daß zur Eingabe der Daten keine Hilfsmittel erforderlich sind. Auch mehrfach angeordnete Druckknöpfe sind als Eingabehilfe denkbar.

Eine vorteilhafte Ausgestaltung der Erfindung besteht darin, die Druckplatte an ihren beiden Enden in Halteschienen zu lagern und diese Halteschienen schwenkbar anzuordnen, wobei eine Drehung der Druckplatte durch ein Schwenken der Halteschienen bewirkt wird. Die Schwenkbewegung kann beispielsweise motorisch oder hydraulisch erfolgen (siehe hierzu deutsche Patentanmeldung P 36 04 209.9). Eine Rückmeldung der Bewegung ist über geeignete Sensoren an dem entsprechenden Stellglied möglich.

Die Seiten- und Umfangsregisterkompensation kann ebenfalls in bekannter Weise mit geeigneten Stellgliedern, beispielsweise Stellmotoren, erfolgen. In vorteilhafter Weise werden dabei die bereits vorhandenen Stellmotoren der Seiten- und Umfangsregister verwendet.

Ausführungsbeispiele der Erfindung sind in der Zeichnung dargestellt und in der nachfolgenden Beschreibung näher erläutert.

Es zeigen:
- Fig. 1a: Die Darstellung zweier gegeneinander verschobener und gedrehter Druckbilder,
- Fig. 1b: eine weitere Darstellung zweier gegeneinander gedrehter Druckbilder,
- Fig. 2: ein Eingabe- bzw. Anzeigegerät zur Eingabe der für eine Korrektur erforderlichen Daten,
- Fig. 3: ein weiteres Ausführungsbeispiel eines Eingabe- bzw. Anzeigegeräts,
- Fig. 4: ein Eingabe- und Anzeigegerät zur Farbprofileinstellung und Korrektur der Druckplatten,
- Fig. 5: ein Blockschaltbild zur Durchführung der Korrektur der Druckplattenlage,
- Fig. 6: ein Flußdiagramm zur Darstellung der Verfahrensschritte einer Korrektur.

Die Abbildung gemäß Fig. 1a zeigt einen Probedruck mit dem Druckbild 1 einer ersten Farbe und dem Druckbild 2 einer zweiten Farbe. Gegenüber dem Druckbild 2 zeigt das Druckbild 1 innerhalb des Bereichs 39 sowohl eine Umfangsregisterverschiebung Fu als auch eine Seitenregisterverschiebung Fs und eine Schräglage, die durch den Verdrehwinkel Fα definiert ist. Die Fehlergrößen sind natürlich sehr gering und wurden lediglich zum besseren Verständnis sehr stark überzeichnet. Aus diesem Probedruck ermittelt ein Drucker beispielsweise durch Auswerten von Paßmarken die Registerabweichungen und die Verdrehung des Druckbildes 1 zum Druckbild 2. Die Paßmarken werden beispielsweise in bekannter Weise mittels Meßlupe oder mit Paßmarkenleser ausgewertet. Selbstverständlich besteht auch die Möglichkeit, direkt im Bild die Passerfehler zu bestimmen. Die drei ermittelten Fehlergrößen Fu, Fs, Fα werden über ein geeignetes Eingabegerät, beispielsweise graphisch, wie weiter unten beschrieben, einer Recheneinrichtung zugeführt, die aus diesen Größen die erforderlichen Stellsignale erzeugt, d.h. die Druckplatte 1 um deren Drehpunkt B mit dem Winkel Fα verschwenkt und gleichzeitig Stellsignale zur Registerverschiebung erzeugt, wobei die Registerverschiebung aufgrund der Verschwenkung um den Punkt B und der aus dem Probedruck ermittelten Registerverschiebung bestimmt wird.

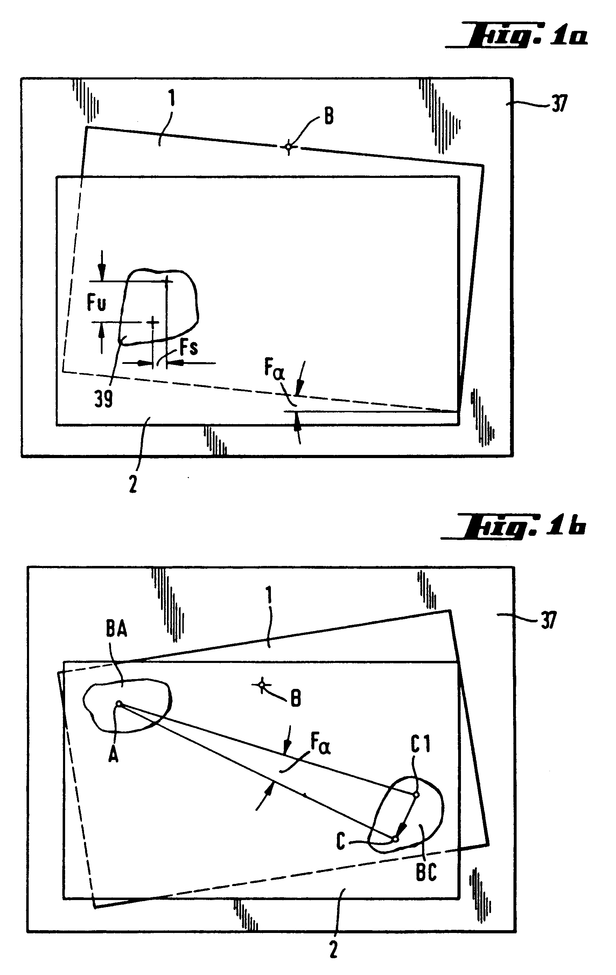

Die Abbildung nach Fig. 1b zeigt einen Sonderfall einer Verdrehung zweier Druckbilder. Die Lage des Druckbildes 2 ist die Bezugslage, während das Druckbild 1 gegenüber dem Druckbild 2 verdreht ist. Die Umfangs- und Seitenregistereinstellung ist in diesem Beispiel korrekt. Damit ergibt sich ein Paßpunkt A bzw. ein Bereich BA, der eine gute Passerhaltigkeit zeigt. Hier liegt ein Sonderfall vor, d.h. bei einer Registerhaltigkeit ist innerhalb des Druckbildes ein Bereich BA vorhanden, der Passerhaltigkeit zeigt, während in einem davon entfernt liegenden Bereich BC die Passerabweichung nur aufgrund des Verdrehwinkels verursacht wird und damit direkt aus dieser Passerabweichung der Drehwinkel Fα bestimmt werden kann. Das Erfassen der Daten kann beispielsweise folgendermaßen geschehen:
Der Drucker sucht auf dem Probedruck 37 den Bereich BA, der eine gute Passerhaltigkeit zeigt. In diesen Bereich BA wird der Paßpunkt A gelegt, wobei eine exakte Definition der Lage des Paßpunktes selbstverständlich nicht immer möglich ist und auch zur Durchführung des Verfahrens nicht erforderlich ist. Der Bereich, in dem sich die größte Passerabweichung befindet oder in dem sich eine Passerabweichung feststellen läßt (Bereich BC), wird ebenfalls aus dem Probedruck ermittelt und ein zu einem Punkt C auf dem Druckbild 2 verschobener Punkt C 1 auf dem Druckbild 1 festgestellt, der den Abstand zwischen diesen beiden Punkten C/C1 ermittelt und der den Winkel Fα bestimmt. Die Wahl der Lage des Bereichs BC ist beliebig, wichtig ist nur, daß in dem gewählten Bereich eine genaue Winkelbestimmung möglich ist.
Eine Drehung der Druckplatte, auf der sich das Druckbild 1 befindet, um den Paßpunkt A, muß mit dem Winkel Fα, durchgeführt werden. Dieser Paßpunkt A kann sich an einer beliebigen Position befinden. Die Drehung erfolgt nach einer Bestimmung der genannten Punkte dadurch, daß die Druckplatte mit dem Druckbild 1 um eine feste Position B verdreht wird. Die feste Position ist bestimmt durch die konstruktive Ausbildung der schwenkbaren Druckplattenaufspannvorrichtung.

Selbstverständlich ist es möglich, bei einer Druckmaschine mit mehreren Druckwerken jeden Druckplattenzylinder mit einer dreh- bzw. verschwenkbaren Druckplattenaufnahme auszurüsten, um eine evtl. vorhandene Schräglage aller Druckbilder korrigieren zu können. Hierzu kann die Lage einer Druckplatte in einem bestimmten Druckwerk als Bezugslage gewählt werden. Üblicherweise wird dazu das Druckwerk bestimmt, bei dem die Farbe am besten den Druckbedingungen entspricht.

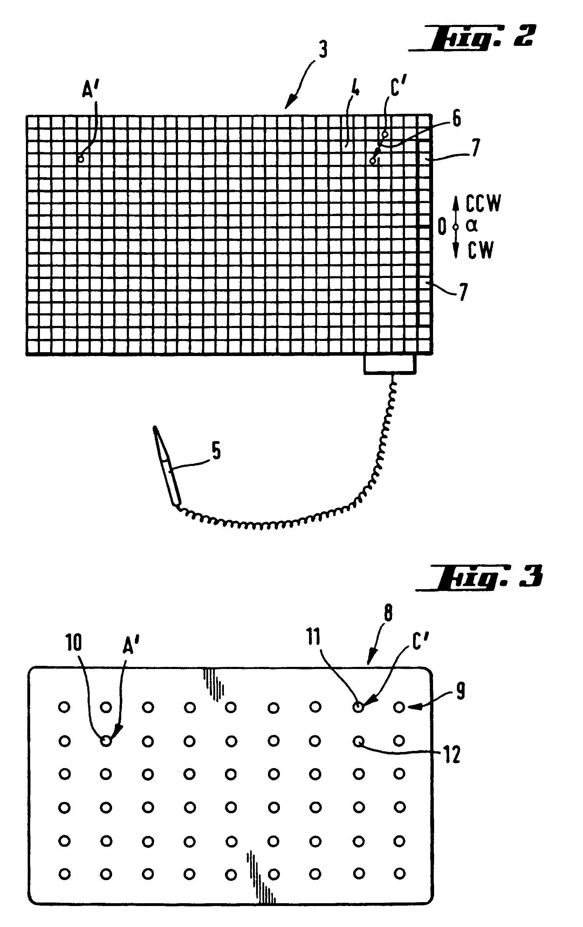

In Fig. 2 ist ein Eingabegerät 3 dargestellt, mit welchem die zur Korrektur der Winkellage erforderlichen Daten graphisch eingegeben werden können. Dieses Eingabegerät 3 weist eine Sensorfläche 4 auf, die aus einem Array mit lichtempfindlicher Elementen besteht. Mit einem Lichtgriffel 5 können die lichtempfindlichen Elemente aktiviert werden. Das Sensorfeld 4 soll das Druckbild darstellen. so daß zur Eingabe des schon vorhandenen Passerdrehpunktes A' gemäß Fig. 1b oder des gewünschten Paßpunktes in einem bildwichtigen Bereich gemäß Fig. 1a mit dem Lichtgriffel 5 auf dem Sensorfeld 4 die Position eingegeben wird, die der Position des Passerdrehpunktes A auf dem Druckbild entspricht. In gleicher Weise wird die Position C' eingegeben, an welcher der Verdrehwinkel auf dem Druckbild festgestellt wurde.

Zur Eingabe der Größe und der Richtung des Verdrehwinkels gibt es mehrere Möglichkeiten. Einige sollen hier aufgezeigt werden. Über eine nummerische Tastatur ist der Winkel und dessen Richtung direkt als Sehnenlänge mit entsprechendem Vorzeichen eingebbar.

Mit dem Lichtgriffel 5 kann der Winkel, ausgehend von dem Punkt C', durch eine Bewegung des Lichtgriffels in Richtung des Pfeils 6 nach Größe und Richtung eingegeben werden. Selbstverständlich ist dabei zu berücksichtigen, daß die Größe des Winkels in einem vergrößerten Maßstab einzugeben ist, um überhaupt eine Eingabemöglichkeit für sehr kleine Winkel zu schaffen.

Eine weitere Möglichkeit besteht darin, daß an dem Sensorfeld ein Winkeleingabefeld 7 vorgesehen ist, in welches der Winkel Fd durch eine Bewegung des Lichtgriffels 5, ausgehend von einem Nullpunkt, in eine der beiden Drehrichtungen CW - CCW ebenfalls mit vergrößertem Maßstab eingebbar ist.

Zur Darstellung der eingegebenen Daten kann das Sensorfeld mit einem Anzeigefeld unterlegt sein, so daß eine Eingabe der Punkte A' C' und der Sehnenlänge des Winkels F sofort angezeigt wird und ein späterer Vergleich der eingegebenen Daten mit dem Druckbild möglich ist.

Anstelle der lichtempfindlichen Sensoren und eines Lichtgriffels ist es beispielsweise auch denkbar druckempfindliche Sensoren zu verwenden, die durch Fingerdruck aktiviert werden können. Die Eingabe der Daten ist nicht auf bestimmte Sensoren bzw. Eingabeelemente beschränkt. Aus der Vielzahl der bekannten Sensorelemente zur Bildung von Eingabefeldern kann zur Durchführung des Verfahrens das für den jeweiligen Anwendungszweck günstigste ausgewählt werden.

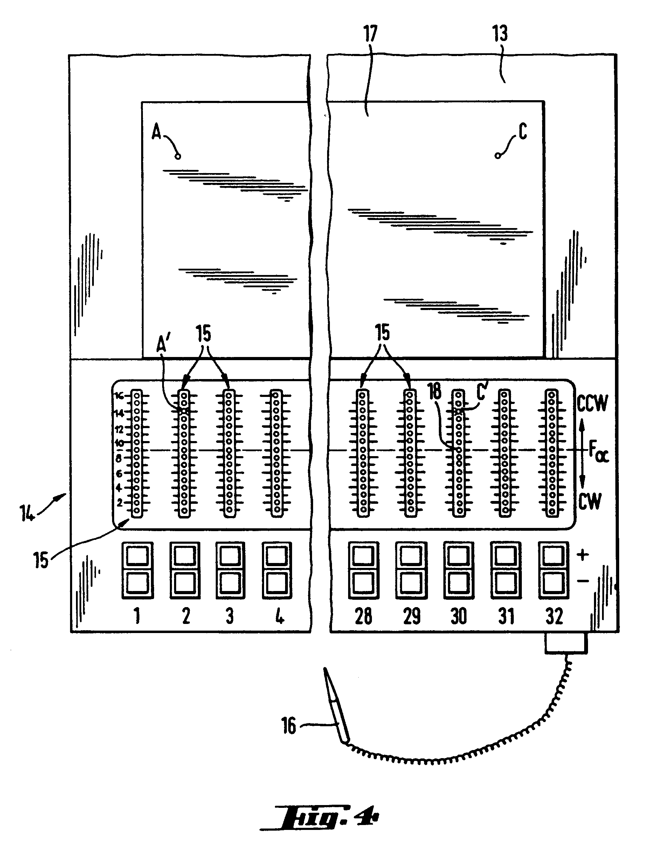

Eine weitere Variante eines Anzeigegeräts zeigt Fig. 3. Das Eingabegerät 8 enthält ein Tastenfeld 9 mit Drucktasten. Auch hier wird die Lage des Paßpunktes A' durch Drücken einer an der entsprechenden Position oder in der Nähe dieser Position befindlichen Taste 10 und die Lage der Stelle C', an welcher der Verdrehwinkel festgestellt wurde, durch Drücken der Taste 11, die sich im Bereich dieser Stelle befindet, vorgenommen. Die Größe des Winkels kann beispielsweise auch dadurch eingegeben werden, daß die Taste 11 mehrfach niedergedrückt wird und jedes Betätigen der Taste einem bestimmten Winkelinkrement entspricht. Die Richtung des Drehwinkels wird dann durch Betätigen einer der Taste 11 benachbarten Taste 12, die in der Richtung liegt, in welche die Druckplatte bzw. das Druckbild gedreht werden muß, eingegeben.

Die Eingabe der Registerabweichungen Fu, Fs ist in der Fig. 2 und 3 nicht dargestellt und kann in bekannter Weise durch eine nummerische Eingabe oder direkt über einen Paßmarkenleser eingegeben werden.

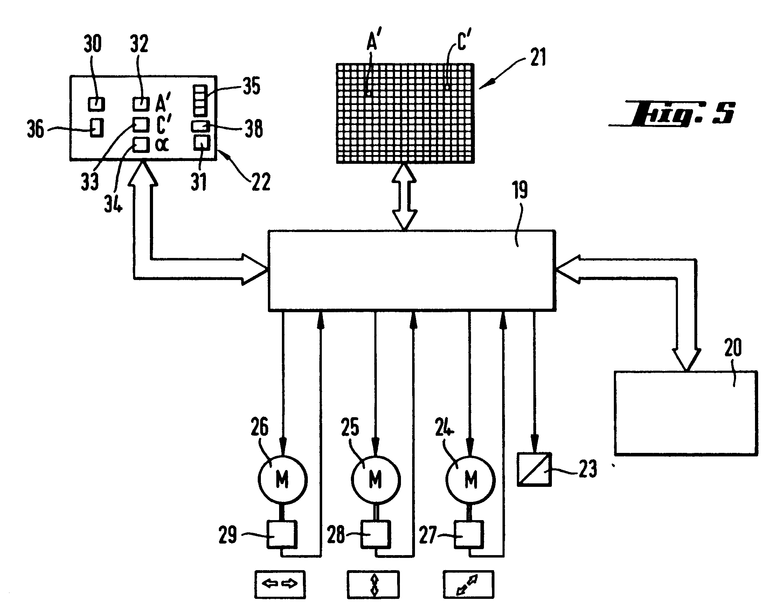

Ein weiteres Ausführungsbeispiel zur Eingabe einer Druckplattendrehung zeigt Fig. 4. Die meisten bekannten Offsetdruckmaschinen, insbesondere Bogenoffsetdruckmaschinen, weisen einen Steuerpult auf, der u.a. zum Einstellen des Farbschichtdickenprofils in den einzelnen Druckwerken vorgesehen ist. Ein solcher Steuerpult ist beispielsweise unter dem Namen CPC I von der Firma HEIDELBERGER DRUCKMASCHINEN AKTIENGESELLSCHAFT (Literaturstelle: "HEIDELBERGER Nachrichten" 3/40) bekannt.

Ein Ausschnitt eines Bedien- und Anzeigefeldes eines solchen Steuerpultes zeigt Fig. 4. Auf diesem Steuerpult befindet sich im unteren Bereich ein Farbzonendisplay. Das Farbzonendisplay 14 besteht aus 32 Leuchtdiodenreihen 15, wobei jede Leuchtdiodenreihe durch Aufleuchten einer oder zweier Leuchtdioden die Stellung eines Farbdosierzylinders anzeigt. Die Position einer Leuchtdiodenreihe entspricht dabei jeweils der Position des Farbdosierzylinders im Farbwerk. Damit besteht die Möglichkeit, bei einem Druckprodukt 17, das oberhalb des Farbzonendisplays 14 auf den Steuerpult 13 gelegt werden kann, die Farbgebung in den einzelnen Farbzonen aufgrund der Zuordnung Farbzone zu Leuchtdiodenreihe in einfacher Weise zu beeinflussen. Eine Veränderung der Stellung der Dosierzylinder kann mittels eines Lichtgriffels 16 an der jeweils entsprechenden Leuchtdiodenreihe eingegeben werden. Hierzu ist jeder Leuchtdiode ein lichtempfindlicher Sensor zugeordnet.

Mit diesem Steuerpult und dem Farbzonendisplay ist es möglich nach Änderungen des Eingabemodus die Daten zur Lagekorrektur einer Druckplatte graphisch einzugeben. Hierzu wird der Passerdrehpunkt A, der sich ja in einer ganz bestimmten Farbzone befindet, dadurch eingegeben, daß in der der Farbzone entsprechenden Diodenreihe mit dem Lichtgriffel der Punkt eingegeben wird, der etwa der Lage des Paßpunktes in der Längsrichtung des Druckbogens entspricht. Dieser eingegebene Punkt ist in der Fig. 4 mit A' bezeichnet und wird durch Aufleuchten der zugehörigen Leuchtdiode angezeigt. Die Länge der Leuchtdiodenreihe 15 wird dabei als Länge des Druckbogens festgelegt. In gleicher Weise wird der Punkt C, an dem die Abweichung von der Winkellage ermittelt wurde, an der Leuchtdiodenreihe eingegeben, die der Farbzone entspricht, in welcher sich der Punkt C befindet (Leuchtdiodenreihe 15). Auch die vertikale Lage des eingegebenen Punktes C' auf der Leuchtdiodenreihe muß dabei näherungsweise der Lage des Punktes C auf dem Druckbogen entsprechen. Dieser eingegebene Punkt C' leuchtet ebenfalls nach der Eingabe auf. Die Eingabe der Größe und der Richtung des Verdrehwinkels kann in diesem Beispiel, ähnlich wie in Fig. 2 durch die Eingabe mit einem Winkeleingabefeld gezeigt, vorgenommen werden. Hierzu wird der Eingabemodus an dem Farbzonendisplay geändert, und zwar in der Weise, daß beispielsweise in der Leuchtdiodenreihe, in welcher der Punkt C' eingegeben wurde (Leuchtdiodenreihe 15), nunmehr die neunte Leuchtdiode 18 aufleuchtet und - ausgehend von dieser mittleren Leuchtdiode - durch Bewegen des Lichtgriffels nach oben oder nach unten die Richtung des Winkels und durch die Länge des Weges, der mit dem Lichtgriffel auf der Leuchtdiodenreihe zurückgelegt wird, die Größe des Winkels Fα eingegeben wird. Auch hier kann beispielsweise der Abstand zwischen zwei Leuchtdioden einer bestimmten Sehnenlänge des Winkels Fα zugeordnet werden, so daß die Bedienperson die Möglichkeit hat, mit sehr großer Genauigkeit - bei entsprechender Auflösung - die Größe des Winkels einzugeben. Auch in diesem Fall ist eine Anzeige des eingegebenen Winkels möglich.

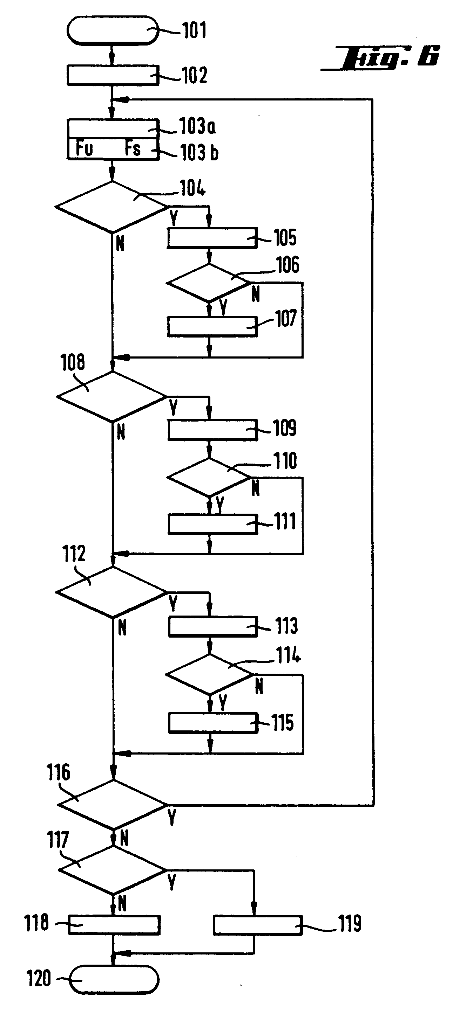

Figur 5 zeigt ein Blockschaltbild mit einer Schaltung und Stellgliedern zur Durchführung einer Lagekorrektur einer Druckplatte. Das Blockschaltbild enthält eine zentrale Verarbeitungseinheit 19, welcher ein Speicher 20 zugeordnet ist. Zur graphischen Eingabe des Passerdrehpunkts A' und des Korrekturpunkts C' bzw. des Winkels Fα und zur Anzeige dieser Eingaben dient ein Eingabe- und Anzeigegerät 21. Zur Eingabe zusätzlicher Daten, wie z.B. Druckwerkauswahl und Registerverschiebung, ist ein zusätzliches Bedienfeld 22 vorgesehen, welches ebenso wie das Eingabe- und Anzeigegerät in Verbindung mit der Verarbeitungseinheit 19 steht. Die Verarbeitungseinheit 19 steht außerdem in Verbindung mit einem Stellglied 23 zum Spannen und Lösen einer Druckplatte, einem Stellmotor 24 zum Drehen der Druckplatte sowie zwei Stellmotoren 25,26 zur Einstellung von Seiten- und Umfangsregister. An den Stellmotoren 24, 25, 26 befinden sich jeweils Winkelstellungssensoren 27,28,29 zur Positionsrückmeldung. In dieser Figur sind nur die Stellelemente für ein Druckwerk bzw. für die Verstellung einer Druckplatte in einem Druckwerk gezeigt. Selbstverständlich können durch die Verarbeitungseinheit 19 die Druckplatten mehrerer Druckwerke verstellt werden; die Stellelemente für die weiteren Druckwerke entsprechen dabei den hier gezeigten Stellelementen.

Anhand des Flußdiagramms in Figur 6 werden die Arbeitsweise der Verarbeitungseinheit 19 und die Funktion des Bedienfeldes 22 näher erläutert. Das Flußdiagramm enthält die Verfahrensschritte 101 bis 120. Nach einem Startsignal 101 wird die Plattenlagekorrektur eingeleitet 102 durch Betätigen einer Einleittaste 30 auf dem Bedienfeld 22. Anschließend wird die Druckwerkauswahl 103a durch Betätigen einer der Druckwerkauswahltasten 35 vorgenommen. Eine Leuchtanzeige zeigt das ausgewählte Druckwerk an. In Anweisung 103b werden die evtl. vorhandenen Registerfehler Fu, Fs für Seiten- und Umfangsregister eingegeben, beispielsweise über das Eingabefeld 38. In einer ersten Abfrage 104 ist die Entscheidung zu treffen, ob ein Paßpunkt eingegeben werden soll. Ist keine Eingabe gewünscht, dann erfolgt anschließend sofort die Abfrage Korrekturpunkt 108. Soll der Paßpunkt eingegeben werden,, dann ist durch Betätigen der Paßpunkttaste 32 der Paßpunkt zu aktivieren (Anweisung 105); ein evtl. in dem Speicher 20 vorhandener Wert für den Paßpunkt wird an dem Eingabe- und Anzeigegerät 21 angezeigt (Punkt A'). In der nachfolgenden Abfrage 106 wird eine Paßpunktänderung abgefragt. Soll der angezeigte Paßpunkt A' nicht geändert werden, so wird Anweisung 107 übersprungen. Bei einer erforderlichen Änderung ist ein neuer Wert A' über das Eingabe- und Anzeigegerät einzugeben. Dieser neu eingegebene Wert wird ebenfalls an dem Eingabe- und Anzeigegerät 21 angezeigt, während der vorherige Wert gelöscht wird. Außerdem wird der neu eingegebene Wert in den Speicher 20 übernommen, d.h. der vorherige Wert wird überschrieben. Die nachfolgende Abfrage 108 betrifft die Eingabe und Änderung des Korrekturpunktes C'. Ist solches nicht erforderlich, dann erfolgt anschließend sofort die Abfrage 112. Wird eine Eingabe gewünscht, so ist der Korrekturpunkt durch Betätigen der Korrekturpunkttaste 33 zu aktivieren (Anweisung 109). Ein gegebenenfalls bereits abgespeicherter Korrekturpunkt C' wird auf dem Eingabe- und Anzeigegerät 21 angezeigt. In der nachfolgenden Abfrage Korrekturpunktänderung 110 ist zu entscheiden, ob der angezeigte Korrekturpunkt erhalten bleibt - in diesem Fall wird Anweisung 111 (Eingabe Korrekturpunkt) übersprungen. Soll ein neuer Korrekturpunkt C' eingegeben werden, so ist die Eingabe des Korrekturpunktes (Anweisung 111) über das Eingabe- und Anzeigegerät vorzunehmen. Der neu eingegebene Korrekturpunkt C' wird ebenfalls in den Speicher 20 übernommen; der vorherige Korrekturpunkt wird im Speicher und in der Anzeige gelöscht. Die Abfrage 112 betrifft die Anzeige und Eingabe des Winkels Fα nach Größe und Richtung. Eine Nein-Entscheidung führt zu einer Druckwerkabfrage 116, eine Ja-Entscheidung aktiviert die Winkelanzeige (Anweisung 113), ein in den Speicher 20 eingespeicherter Winkel Fα wird über das Eingabe- und Anzeigegerät 21 angezeigt. Nach Betätigen der Winkeltaste 34 auf dem Bedienfeld 22 und nach Anzeige des abgespeicherten Winkels Fα ist in der Abfrage 114 die Entscheidung zu treffen, ob der bisher abgespeicherte Winkel nach Größe und Richtung erhalten bleibt. In diesem Fall wird die Eingabe eines neuen Winkels (Anweisung 115) übersprungen. Die Eingabe eines neuen Winkels erfolgt ebenfalls über das Eingabe- und Anzeigegerät 21. Die graphische Eingabe des Winkels kann mit den Eingabeverfahren, die anhand der Fig. 2, 3 und 4 beschrieben worden sind, durchgeführt werden. Auch dieser Wert wird im Speicher 20 abgespeichert und der bisher abgespeicherte und der vorher angezeigte Wert gelöscht. Die nachfolgende Abfrage 116 betrifft das Anwählen eines weiteren Druckwerkes, d.h., soll eine Drehung einer Druckplatte in einem weiteren Druckwerk ebenfalls durchgeführt werden, so ist nach dem Anwählen dieses Druckwerks über die Druckwerkauswahltaste 35 der gesamte Verfahrensablauf zu wiederholen; ist die Drehung einer Platte in einem weiteren Druckwerk nicht erforderlich, dann ist in einer nachfolgenden Abfrage 117 zu entscheiden, ob die Verstellung der Druckplatte bzw. der Druckplatten gemäß den eingegebenen Daten durchgeführt werden soll. Ist eine Verstellung aus bestimmten Gründen nicht erforderlich, dann werden durch Betätigen einer Löschtaste 36 die angegebenen Daten gelöscht (Anweisung 118). Ist eine Verstellung anhand der abgespeicherten bzw. eingegebenen Daten erwünscht, wird die Eingabetaste 31 betätigt und daraufhin die Verstellung durchgeführt (Anweisung 119). Zur Verstellung der Druckplatte mittels der Motoren 24, 25, 26 werden aus den in Speicher 20 abgespeicherten Daten folgende Werte berechnet:
Die Koordinaten der Punkte A und C auf dem Druckbild, die Größe des Winkels Fα aus der eingegebenen Sehnenlänge des Winkels und den Koordinaten der Punkte A und C.

Die Koordinaten der Punkte A und C können in einfacher Weise aufgrund des Maßstabsfaktors zwischen der Größe des Eingabefeldes und der Größe der Druckplatte berechnet werden; ebenso ist die Berechnung des Winkels aus dem eingegebenen Wert in einfacher Weise durchzuführen. Die Berechnung der Verstellung von Seiten- und Umfangsregister erfolgt nach den eingegebenen Umfangs- und Seitenregisterfehlern Fu, Fs und nach der Lage des Paßpunktes zu dem Plattendrehpunkt B.

Nachdem die Stellgrößen für die Motoren zur Verfügung stehen, wird die zu verstellende Platte mittels des Stellgliedes 23 so weit von dem Plattenzylinder gelöst, daß eine Drehung möglich ist und anschließend diese Drehung um den Winkel Fα mit dem Motor 24 durchgeführt. Nach dieser Verdrehung wird die Platte wieder gespannt. Gleichzeitig oder anschließend wird mit den Motoren 25 und 26 eine Korrektur der Seiten- und Umfangsregisterverschiebung durchgeführt. Die Rückmeldung der durch die Motoren ausgeführten Bewegungen erfolgt über die Winkelstellungssensoren 27, 28, 29.
Mit dem Verfahrensschritt 120 (Ende)wird der Korrekturprozess abgeschlossen.

### BEZUGSZEICHENLISTE

- 1: Druckbild
- 2: Druckbild
- 3: Eingabegerät
- 4: Sensorfeld
- 5: Lichtgriffel
- 6: Pfeil
- 7: Winkeleingabefeld
- 8: Eingabegerät
- 9: Tastenfeld 21 Eingabe- und Anzeigegerät
- 10: Taste
- 11: Taste
- 12: Taste
- 13: Steuerpult
- 14: Farbzonendisplay
- 15: Leuchtdiodenreihe
- 16: Lichtgriffel
- 17: Druckbogen
- 18: mittlere Leuchtdiode
- 19: Verarbeitungseinheit
- 20: Speicher
- 21: Eingabe- und Anzeigegerät
- 22: Bedienfeld
- 23: Stellglied
- 24: Stellmotor
- 25: Stellmotor Umfangsregister
- 26: Stellmotor Seitenregister
- 27: Winkelstellungssensor
- 28: Winkelstellungssensor
- 29: Winkelstellungssensor
- 30: Einleittaste
- 31: Eingabetaste
- 32: Passerdrehpunkttaste
- 33: Korrekturpunkttaste
- 34: Winkeltaste
- 35: Druckwerkauswahltaste
- 36: Löschtaste
- 37: Probedruck
- 38: Eingabefeld
- 39: Bereich
- 101: Start 30 Einleittaste
- 102: Einleitung "Plattendrehung"
- 103a: Druckwerksauswahl
- 103b: Registerfehlereingabe
- 104: Abfrage "Passerdrehpunkt"
- 105: Passerdrehpunkt aktivieren
- 106: Abfrage Passerdrehpunkt
- 107: Eingabe Passerdrehpunkt
- 108: Abfrage Korrekturpunkt
- 109: Korrekturpunkt aktivieren
- 110: Abfrage Korrekturpunktänderung
- 111: Eingabe Korrekturpunkt
- 112: Abfrage Winkel
- 113: Winkel aktivieren
- 114: Abfrage Winkeländerung
- 115: Eingabe Winkel
- 116: Abfrage weiteres Druckwerk
- 117: Abfrage Verstellung durchführen
- 118: Löschen
- 119: Berechnung Verstellgrößen
- 120: Ende
- FU: Umfangsregisterverschiebung
- FS: Seitenregisterverschiebung
- F: Verdrehwinkel
- A': Passerdrehpunkt
- A': Passerdrehpunkt
- C: Punkt
- C1: Punkt
- C': Punkt
- B: Drehpunkt
- BA: Bereich
- BC: Bereich
- CW: Drehrichtung
- CCW: Drehrichtung

## Patentansprüche

1. Verfahren zur Passerkorrektur durch Verschwenken einer biegsamen Druckplatte auf dem Plattenzylinder einer Druckmaschine, wobei die Druckplatte um einen Plattenpunkt schwenkbar auf dem Plattenzylinder angeordnet ist und in der Maschine Einrichtungen für Umfangs- und Seitenregisterverstellungen vorgesehen sind, wobei eine endgültige Paßkorrektur des Druckbildes durch Plattendrehung nach einem Probedruck derart erfolgt, daß zunächst die Daten der Passerabweichung (Fᵤ, F_{S}, F_{α}) eines bestimmten Paßpunktes in Umfangs- (Fᵤ) und/oder Seiten- (F_{S}) und/oder Winkellage (F_{α}) ermittelt werden und anschließend erforderliche Stellvorgänge für die Plattendrehung sowie für das Umfangs- und Seitenregister eingeleitet werden,
**dadurch gekennzeichnet**,
daß Stellbefehle aus den vorher ermittelten Daten auch die Lage eines Plattendrehpunktes (B) der zugehörigen Vorrichtung berücksichtigen.

2. Vorrichtung mit einer um einen Plattenpunkt schwenkbar auf einem Plattenzylinder angeordneten Druckplatte zur Durchführung des Verfahrens nach Anspruch 1, mit folgenden Komponenten:
a) Einrichtung zum Erfassen der Daten des Paßpunktes, das sind sein Ort und die dort vorhandenen Passerabweichungen in Umfangs- (Fᵤ) und Seitenlage (F_{S}) sowie die Abweichung von der Winkellage (F_{α}),
b) Einrichtungen mit Stellgliedern zur Korrektur des Umfangs- und Seitenregisters und zum Verschwenken der Druckplatte auf dem Plattenzylinder,
**dadurch gekennzeichnet**,
daß ein Rechner (19) zur Verknüpfung dieser Daten mit den Bedingungen eines fixen Plattendrehpunktes (B) und zur Ermittlung der Stellbefehle für entsprechende Stelleinrichtungen (23,24,25,26) vorgesehen ist.

3. Vorrichtung nach Anspruch 2,
**dadurch gekennzeichnet,**
daß mittels einer Eingabeeinrichtung (21) mit einem Eingabefeld (4), welches die Größe einer Druckplatte darstellt, die Lage des Paßpunktes und Größe und Richtung des zur Korrektur der Winkellage erforderlichen Schwenkwinkels graphisch und/oder numerisch entsprechend den aus dem Druckprodukt entnehmbaren Abweichungen eingegeben werden.

4. Vorrichtung nach Anspruch 3,
**dadurch gekennzeichnet,**
daß der Maßstab des Eingabefeldes (4) bezüglich der Druckplatte bliebig und/oder in x- und y- Richtung unterschiedlich ist.

5. Vorrichtung nach einem der vorherigen Ansprüche 3 oder 4,
**dadurch gekennzeichnet,**
daß das Eingabefeld (4) ein Sensorfeld ist, mit welchem die Lage des Paßpunktes und/oder der Schwenkwinkel nach Größe und Richtung über die, die entsprechenden Sensoren aktiverenden Eingabemittel eingegeben werden.

6. Vorrichtung nach einem der voherigen Ansprüche 3 oder 4,
**dadurch gekennzeichnet,**
daß das Eingabefeld (4) ein Drucktastenfeld ist, in welches die Daten durch Betätigen entsprechender Tasten eingebbar sind.

7. Vorrichtung nach einem der vorherigen Ansprüche 5 oder 6,
**dadurch gekennzeichnet,**
daß dem Eingabefeld (4) ein Anzeigefeld untergelagert ist, mit welchem die eingegebenen Positionen und/oder Daten angezeigt werden.

8. Vorrichtung nach Anspruch 3,
**dadurch gekennzeichnet,**
daß mit einem Eingabe- und Anzeigefeld (14) zur Farbmengenregulierung in Farbzonen, welches den Farbzonen zugeordnete Eingabe- und Anzeigeelemente aufweist, die Eingabe und Anzeige der Lage des Paßpunktes und des Schwenkwinkels nach Größe und Richtung nach einer Änderung des Eingabemodus durchgeführt wird, wobei die Farbzonenreihe (15) eine erste Richtung des Eingabe- und Anzeigenfeldes darstellt und die linienförmigen Farbzoneneinstell- und -anzeigeelemente jeder Farbzone die senkrecht auf der ersten Richtung stehende Richtung des Eingabe- und Anzeigefeldes darstellt.

9. Vorrichtung nach einem der vorherigen Ansprüche 3, 5 oder 8,
**dadurch gekennzeichnet,**
daß mit einem Lichtgriffel (5) die Eingabedaten eingegeben werden.

10. Vorrichtung nach einem der vorherigen Ansprüche,
**dadurch gekennzeichnet,**
daß die Druckplatte an beiden Enden in Halteschienen gelagert ist und die Halteschienen verschwenk- und verschiebbar angeordnet sind, wobei eine Verdrehung der Druckplatte um den Plattendrehpunkt über wenigstens ein auf die Halteschienen einwirkendes Stellglied erfolgt.

## Claims

1. Method of register correction by pivoting a flexible printing plate on the plate cylinder of a printing machine, the printing plate being arranged on the plate cylinder so as to pivotable about a turning point of said plate, and devices for adjusting the circumferential and lateral registers being provided in the machine, in which method a final register correction of the image to be printed takes place, alter a proof has been printed, by turning the plate such that, first of all, the data of the register deviation (Fᵤ, Fₛ, F_{α}) of a defined register point in a circumferential position (Fᵤ) and/or lateral position (Fₛ) and/or angular position (F_{α}) are determined and, thereafter, adjusting operations necessary for turning the plate and for the circumferential and lateral registers are initiated,
characterized in
that adjustment commands based on the data previously determined also take into account the position of the turning point (B) of the plate of the associated apparatus.

2. Apparatus having a printing plate arranged on a plate cylinder so as to be pivotable about a turning point of the plate for carrying out the method according to Claim 1, said apparatus comprising the following components:
a) device for detecting the data of the register point i.e. its location and the register deviations, existing at said location, in a circumferential position (Fᵤ) and a lateral position (Fₛ) and the deviation from a angular position (F_{α}),
b) devices having adjusting elements for correcting the circumferential and lateral registers and for pivoting the printing plate on the plate cylinder,
characterized in
that a computer (19) for linking said data with the conditions of a fixed turning point (B) of the printing plate and for determining the adjustment commands for respective adjustment devices (23, 24, 25, 26).

3. Apparatus according to Claim 2,
characterized in
that the position of the register point and the magnitude and the direction of the pivoting angle necessary for correcting the angular position are entered graphically and/or numerically according to the deviations resulting from the printed product by means of an input device (21) having a input panel (4) representing the size of a printing plate.

4. Apparatus according to Claim 3,
characterized in
that the scale of the input panel (4) in respect of the printing plate may be selected as desired and/or may differ in the directions x and y.

5. Apparatus according to one of the preceding Claims 3 or 4,
characterized in
that the input panel (4) is an array of sensors with which the position of the register point and/or the pivoting angle is entered according to magnitude and direction via the input means activating the respective sensors.

6. Apparatus according to one of the preceding Claims 3 or 4,
characterized in
that the input panel (4) is an array of depressible keys into which the data may be entered by actuating respective keys.

7. Apparatus according to one of the preceding Claims 5 or 6,
characterized in
that a display panel displaying the positions and/or data entered is arranged subjacent to the input panel (4).

8. Apparatus according to Claim 3,
characterized in
that, by means of an input and display panel (14) which regulates the amount of ink in the ink zones and features input and display elements assigned to said ink zones, the input and display of the position of the register point and of the pivoting angle are carried out according to magnitude and direction, after the input mode has been changed, with the ink-zone column (15) representing a first direction of the input and display panel and the linear setting and display elements of each ink zone representing the direction of the input and display panel which is perpendicular to the first direction.

9. Apparatus according to one of the preceding Claims 3, 5 or 8,
characterized in
that the input data are entered by means of a light pen (5).

10. Apparatus according to one of the preceding claims,
characterized in
that the printing plate is mounted at both ends in support rails, and that the support rails are arranged so as to be pivotable and displaceable, with the printing plate being turned about the turning point of the printing plate via at least one adjusting elements acting on said support rails.

## Revendications

1. Procédé pour correction de concordance par pivotement d'une plaque d'impression flexible sur le cylindre porte-plaques d'une machine d'impression, la plaque d'impression étant montée sur le cylindre porte-plaques de façon à pouvoir pivoter autour d'un point de la plaque et des dispositifs étant prévus dans la machine pour des modifications de repérage circonférentiel et de repérage latéral, procédé selon lequel une correction valable d'adaptation de l'image imprimée est produite en faisant tourner la plaque après une impression d'épreuve de telle sorte qu'initialement les données concernant l'écart de concordance (Fᵤ, Fₛ, F_{α}) d'un point de concordance déterminé soient obtenues en position circonférentielle (Fᵤ) et/ou latérale (Fₛ) et/ou en position angulaire (F_{α}) et qu'ensuite les opérations nécessaires de manoeuvre pour la rotation de plaque ainsi que pour le repérage circonférentiel et le réperage latéral soient effectuées, caractérisé en ce que les ordres de manoeuvre tiennent compte, à partir des données prédéterminées, également de la position du point (B) de rotation de plaque de l'appareil associé.

2. Appareil, comportant une plaque d'impression montée sur un cylindre porte-plaques de façon à pivoter autour d'un point de plaque, pour la mise en oeuvre du procédé selon la revendication 1, appareil comportant les composants suivants:
a) un dispositif pour capter les données du point de concordance, c'est-à-dire sa position et les écarts correspondants de concordance en ce qui concerne la position circonférentielle (Fᵤ), la position latérale (Fₛ) ainsi que l'écart de la position angulaire (F_{α}),
b) des dispositifs comportant des organes de manoeuvre pour une correction du repérage circonférentiel et du repérage latéral et pour un pivotement de la plaque d'impression sur le cylindre porte-plaques, caractérisé en ce qu'un ordinateur (19) est prévu pour combiner ces données avec les conditions d'un point fixe (B) de rotation de plaque et pour déterminer les ordres de manoeuvre pour des dispositifs de manoeuvre correspondants (23, 24, 25, 26).

3. L'appareil selon la revendication 2, caractérisé en ce que, a moyen d'un dispositif d'entrée (21) comportant un panneau d'entrée (4), qui représente la grandeur d'une plaque d'impression, la position du point de concordance ainsi que la grandeur et la direction de l'angle de pivotement nécessaire pour une correction de la position angulaire sont introduites graphiquement et/ou numériquement en correspondance aux écarts pouvant être déduits du produit imprimé.

4. Appareil selon la revendication 3, caractérisé en ce que l'échelle du panneau d'entrée (4) est arbitraire par rapport à la plaque d'impression et/ou est différente dans la direction x et la direction y.

5. Appareil selon une des revendications 3 ou 4, caractérisé en ce que le panneau d'entrée est un panneau de captage à l'aide duquel la position du point de concordance et/ou l'angle de pivotement sont introduits, en grandeur et en direction, par l'intermédiaire des moyens d'entrée assurant l'activation des capteurs correspondants.

6. Appareil selon une des revendications 3 ou 4, caractérisé en ce que le panneau d'entrée (4) est un panneau à touches d'impression dans lequel les données peuvent être introduites par actionnement de touches correspondantes.

7. Appareil selon une des revendications 5 ou 6, caractérisé en ce qu'en dessous du panneau d'entrée (4) est disposé un panneau d'affichage à l'aide duquel les positions et/ou les dorées introduites seront affichées.

8. Appareil selon la revendication 3, caractérisé en ce qu'il comporte un panneau d'entrée et d'affichage (14) pour une régulation de quantités d'encre dans des zones d'encre, ce panneau étant pourvu d'éléments d'entrée et d'affichage qui sont associés aux zones d'encre, l'entrée et l'affichage de la position du point de concordance et de l'angle de pivotement en grandeur et en direction sont effectués après une modification du mode d'entrée, la rangée (15) de zones d'encre représentant une première direction du panneau d'entrée et d'affichage et les éléments linéaires de réglage et d'affichage de zones d'encre représentant pour chaque zone d'encre la direction du panneau d'entrée et d'affichage qui est orientée perpendiculairement à la première direction.

9. Appareil selon une des revendications précédentes 3, 5 ou 8, caractérisé en ce que les données d'entrée sont introduites à l'aide d'un crayon lumineux (5).

10. Appareil selon une des revendications précédentes, caractérisé en ce que la plaque d'impression est montée par ses deux extrémités dans des barres de maintien et les barres de maintien sont disposées de façon à etre déplaçables par pivotement et translation, une rotation de la plaque d'impression autour du point de rotation de plaque étant produite par l'intermédiaire d'au moins un organe d'actionnement agissant sur les barres de maintien.
